# EUROPEAN PATENT SPECIFICATION

(11) **EP 3 584 549 B1**
(45) Date of publication and mention of the grant of the patent: **12.04.2023**
(21) Application number: 18425045.4
(22) Date of filing: 18.06.2018
(51) Int. Cl.: G01J 1/02, G01J 1/04, G01S 3/782, G01J 1/42, G01S 3/786

(54) **POLYHEDRAL SOLAR SENSOR**
POLYEDRISCHER SOLARSENSOR
CAPTEUR SOLAIRE POLYÉDRIQUE

(43) Date of publication of application: 25.12.2019
(73) Proprietor: Alitec S.r.L., 54023 Filattiera (MS) (IT)
(72) Inventor: ROSSI, Alessandro, 6942 Savosa (CH)
(74) Representative: Leotta, Antonio

(56) References cited:
- WO-A2-2011/126316
- IT-A1- UB20 154 608
- FERNANDO MANCILLA-DAVID ET AL: "A Neural Network-Based Low-Cost Solar Irradiance Sensor", IEEE TRANSACTIONS ON INSTRUMENTATION AND MEASUREMENT., vol. 63, no. 3, 1 March 2014 (2014-03-01), pages 583-591, XP055535186, US ISSN: 0018-9456, DOI: 10.1109/TIM.2013.2282005

## Description

### TECHNICAL FIELD

The present invention relates to a system for measuring solar radiation, and in particular at least the contributions of direct solar radiation and diffused solar radiation, by means of a polyhedral solar sensor.

### STATE OF THE ART

The polyhedral solar sensors are a type of solar sensors in which a plurality of photodetectors are associated to a same support, arranged on faces of the support oriented differently one with respect to the other, in such a way that the plurality of photodetectors cover in substantially uniform way a certain solid angle of sky. Most polyhedral solar sensors are used to determine the position of the sun and are associated with solar trackers of the type used in some types of photovoltaic systems.

A polyhedral sensor of this type is described, for example, in U. S. Pat. No. US 4,361,758. In this, a polyhedral solar sensor comprises a multitude of sensors, for example photocells, arranged on the faces of a geodesic dome. The solar sensors are mounted on the faces of the geodesic dome in such a way that they will be facing the sun substantially perpendicular to the angle of incidence of solar radiation sequentially during the apparent movement from East to West of the Sun during the day. The information on the elevation and azimuth position of the sensor which is perpendicular to the incidence direction of the solar radiation is passed to a comparator which controls the operating means of a solar follower. Advantageously, the geodesic dome comprises faces arranged in such a way that each face is perpendicular to the sunlight incidence direction for about one hour.

Another polyhedral solar sensor suitable for determining the position of the sun is described in the international patent application WO 2011/126316. In this a support body of a plurality of sensors has the shape of a polyhedron having an upper flat face arranged substantially horizontal and further faces adjacent to this comprising faces with respective different angles of inclination with respect to the upper face. A control unit provided in the polyhedral sensor is electrically connected to the plurality of the sensors associated to the various faces and is suitable for estimating the position of the sun by selecting on the basis of the signals of at least two sensors which detect the highest values of solar radiation.

In addition to polyhedral solar sensors designed to determine the position of the sun, are also known polyhedral solar sensors for measuring the intensity of solar radiation. These types of sensors are useful in various applications mainly related to meteorology and agronomy.

A sensor of this type is described in the international patent application WO 2008/145796 in which is presented a solar sensor comprising a structure that forms a hemispherical surface formed by rings and half-rings arranged in a parallels and meridians arrangement which identify a reticular configuration with at least twenty-nine connecting nodes in correspondence of which photodetectors are arranged. The data of intensity of the solar radiation detected by the photodetectors are processed using mathematical algorithms in order to obtain the full spectrum of the global radiation of the sky on a point on the ground. The polyhedral solar sensor described above is also able to determine the contributions of the direct solar radiation and of the diffused solar radiation. To achieve this, however, it provides the use of a shading element which must be moved above the hemispherical surface, at a certain distance from it, in order to shade one or more of the photocells.

Another polyhedral solar sensor designed to measure the intensity of solar radiation is described in the international application WO 2015/049626 which more generally concerns a system for controlling the darkening of a window. It is described a sensor provided to be associated to a vertical surface (the surface of a window) and provided with a plurality of photosensitive elements, which are advantageously four arranged on four respective faces perpendicular to each other. Each of the photosensitive elements detects a global radiation, of the illuminance or of the solar irradiance depending on the type of photosensitive elements used. The global radiation detected by a photosensitive element contains a combination of a component of direct radiation and diffused radiation measured in the direction towards which the photosensitive element is directed. Each photosensitive element can be sensitive only in the visible spectrum or on the whole spectrum of solar radiation, but in one embodiment a photosensitive element can comprise two distinct photodiodes, one of which is sensitive in the visible spectrum and one in the solar radiation spectrum. The operation of the polyhedral solar sensor to calculate the direct and diffused components of global solar radiation first of all provides that the relative processor calculates the position of the sun in azimuth and elevation. In order to do this it uses data related to the geographical position and to the time of day. Depending on the position of the sun calculated in this way, it then defines whether a specific photosensitive element is directly illuminated or not. The direct radiation and the diffused radiation are then determined on the basis of analytical calculation algorithms based on the detections of the various photosensitive elements.

The polyhedral solar sensor described in WO 2015/049626 is simple and cheap and yet provides very little accuracy due to the low number of photosensitive elements used, due to the fact that the position of the sun is estimated based on the geographical position and at the time of day and to the fact that the values of direct and diffused solar radiation are calculated only on the basis of analytical algorithms that do not necessarily take into account numerous parameters that determine a deviation from the ideal conditions.

Another polyhedral sensor for measuring solar radiation, able in particular to discriminate the contributions of direct and diffused solar radiation, is described in the Italian patent application published ITUB20154608 , in the name of the same applicant. This polyhedral solar sensor comprises six sensors arranged on adjacent faces of a dodecahedron and each sensor provides two sensitive photodetectors on different frequency spectrums of solar radiation. The number and the solar disposition is such that the sunlight is simultaneously directly incident on at least three distinct sensors so that it is possible to calculate the position of the sun by means of triangulations. Thanks to the calculation of the position of the sun, the processor of the polyhedral solar sensor is able to calculate also the contributions of direct and diffused solar radiation, which occurs through algorithms not described in detail. The sensor described therein is certainly very economical and more accurate than that of WO 2015/049626, but does not suggest a way of calculating the contributions of solar and diffused radiation different from the analytical algorithms already proposed by other known polyhedral solar sensors, which do not necessarily take into consideration numerous parameters that influence real values.

Moreover, among the polyhedral solar sensors of the known art described above there is none that can estimate the contribution of solar radiation reflected from the ground.

### SUMMARY OF THE INVENTION

The object of the present invention is therefore to propose a system for measuring solar radiation by means of a polyhedral solar sensor of a simple and inexpensive type but which, thanks to a peculiar operating mode, is able to provide accurate information relative to the intensity of global solar radiation and at least the contributions of direct and diffused solar radiation.

Another object of the present invention is to propose a system for measuring solar radiation by means of a polyhedral solar sensor which allows to estimate the contribution of solar radiation reflected from the ground.

Another object of the present invention is to propose a system for measuring solar radiation by means of a polyhedral solar sensor which allows to estimate the shape of the skyline useful for calculating the reflected radiation.

Another object of the present invention is to propose a system for measuring solar radiation by means of an economic polyhedral solar sensor which at the same time allows to provide numerous and accurate information relating to the position of the sun, and to the contributions to the global solar radiation both in terms of spectral and in terms of direct, diffuse and reflected radiation, each weighted with the relative spectral weights.

The aforementioned objects and other are achieved by means of a system for measuring the intensity of solar radiation as defined in independent claim 1. Preferred embodiments are defined in the dependent claims.

The peculiar operation mode of the polyhedral solar sensor defined in the claims makes it possible to optimize its performance and accuracy in a particularly simple and economical structure. In fact, the predictive neural network is able to perform over time a self-tuning that increases the accuracy of the sensor itself taking into account variables that could not all be covered by analytical algorithms. At the same time at least one analytical algorithm guides the neural network in order to exploit the precious information deriving from the geometry of the polyhedral solar sensor itself, and in particular from the orientation of the individual sensors with respect to the incident solar radiation.

### BRIEF DESCRIPTION OF THE DRAWINGS

These and other characteristics of the invention will be more easily understood from the following description of a preferred embodiment thereof, given as a non-limiting example, with reference to the attached figures in which:

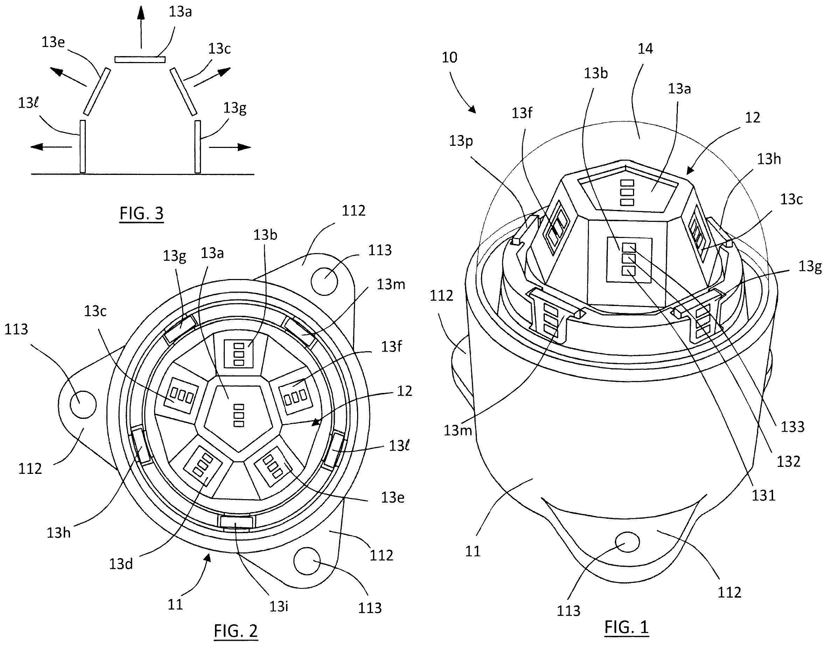

- Fig. 1 shows a perspective view of a polyhedral solar sensor according to the present invention;
- Fig. 2 shows a top view of the polyhedral solar sensor of Fig. 1;
- Fig. 3 shows a positioning scheme with respect to a vertical sensor plane of a polyhedral solar sensor according to the invention.

### DESCRIPTION OF THE PREFERRED EMBODIMENTS

With reference to the attached figures, it is overall indicated with 10 a polyhedral solar sensor according to the present invention generally comprising a substantially cylindrical tubular base, 11, a support, 12, which can be housed in the base to protrude from a top opening thereof and suitable to support a plurality of sensors, from 13a to 13m, and a processor, not shown, associated as well with the support 12. Finally, a transparent dome 14, can be associated above the base 11 to protect the sensors without altering the properties of the incident light. At its bottom end the base 11 has constraining means consisting of three feet 112, arranged at 120°, provided with respective through holes, 113, through which the solar sensor 10 of the invention can be anchored to a horizontal flat surface through simple screw members.

The support 12 is configured to house eleven sensors. A first group of sensors from 13a to 13f, is composed of six sensors arranged with a sensor on each face of a polyhedron with a first sensor, 13a, which is arranged in an upper central face oriented upwards of said support, second sensors, from 13b to 13f, being associated on lateral portions of said support 12 inclined upwards with a same elevation angle and angularly equidistant in the azimuthal plane. In particular, in the exemplary embodiment shown, the first group of sensors from 13a to 13f is arranged according to six adjacent faces of a regular dodecahedron. A second group of sensors, from 13g to 13m, comprising five sensors, is associated with an annular portion of the support external with respect to the aforesaid dodecahedron faces and in which the sensors are arranged vertically, oriented angularly equidistant from each other in the azimuthal plane, and angularly offset with respect to the second sensors from 13b to 13f.

The first group of sensors from 13a to 13f is arranged according to a distribution such that both in elevation and in azimuth each sensor 13 is oriented so as to monitor an angular portion of the sky substantially equal to the others. In fact, in elevation each sensor from 13a to 13f covers an angle of about 60°, while in azimuth each sensor covers an angle of 72°.

Each sensor 13a to 13m comprises three photodetector elements, 131, 132, 133, each advantageously constituted by a phototransistor, mounted side by side with same orientation on the same electronic chip. Each of the three photodetector elements, 131, 132, 133 is sensitive to a certain frequency spectrum of the solar radiation that reaches it. Advantageously, a first photodetector element 131 is sensitive to an infrared spectrum, a second photodetector element 132 is sensitive to a visible spectrum and a third photodetector element 133 is sensitive to an ultraviolet spectrum. Moreover, the sensitivity spectrum of the second photodetector element 132 has a small overlap band both with the spectrum of the first photodetector element 131 and with that of the third photodetector element 133. According to an advantageous alternative embodiment, the same functional effects of the presence of the plurality of photodetector elements 131, 132, 133 are obtained by using sensors from 13a to 13m in which each sensor from 13a to 13m is structurally univocal but capable of measuring separately in three different bands. Each sensor also includes a temperature sensor, not shown, which allows the processor to compensate the thermal drift of the sensor itself.

A system for measuring the intensity of solar radiation by means of a polyhedral solar sensor 10 as described above is carried out by means of the processor integrated in the polyhedral solar sensor 10 itself. In particular, the processor is electrically connected to the plurality of sensors from 13a to 13m in order to receive from each of them data pertaining to the intensity of the solar radiation detected by it and to process said data to determine at least the intensity of the global solar radiation, of the direct solar radiation and of the diffused solar radiation. In order to do this, the processor is configured to process said data according to a predictive neural network scheme whose sensors from 13a to 13m constitute input nodes of said neural network. The predictive neural network is guided by an analytical algorithm suitable for scaling the measurements of said sensors from 13a to 13m on the basis of coefficients defined by a geometric projection model of a point light source that is the sun on the faces of the polyhedral solar sensor 10 itself.

The processor receives and processes data relating to the thirty-three values of the intensity of the solar radiation received from the photodetector elements 131, 132, 133 of each of the sensors from 13a to 13m.

The processor is configured to divide the sensors from 13a to 13m in a group of directly illuminated sensors and a group of not directly illuminated sensors. This distinction is made by evaluating the differences between the measured solar radiation values. If all the sensors return uniform values (difference lower than approximately 10% or in any case at a threshold determined during calibration by comparison with reference measurement stations) then the group of directly illuminated sensors does not contain any sensor and the direct radiation is zero. Otherwise, the sensors detecting substantially homogeneous solar radiation values are assigned to the group of sensors not directly illuminated, while the sensors that detect sensibly higher solar radiation values are assigned to the group of directly illuminated sensors.

On the basis of the solar radiation values detected by the sensors of the group of not directly illuminated sensors, the processor is configured to estimate the value of the diffused radiation. The value of global diffused radiation is given by an appropriately weighted sum of the solar radiation values detected by all the sensors. The processor is configured to define the elementary parameters according to which are established the weights of the contributions of each sensor to said calculation of the diffused radiation based on a predictive neural network model in which each sensor from 13a to 13m constitutes a node of the neural network.

The value of direct radiation is estimated by the processor based on the values of solar radiation detected by the sensors of the group of directly illuminated sensors and taking into account the value of the diffused radiation. In this phase, the processor is configured firstly to use a geometric projection model to determine the position of the sun based on information about the mutual orientations of the individual sensors from 13a to 13m and of the sensor's angular response based on the incidence angle of the sensors themselves. Once the position of the sun has been calculated, the processor is adapted to calculate the direct solar radiation once again taking into account the geometric projection model of the position of the sun on the faces of the support 11 on which the sensors are arranged.

Each of said operations for determining the diffused solar radiation, the direct solar radiation and the position of the sun is performed separately for each of the three spectral bands of the photodetector elements 131, 132 and 133 respectively. This way, not only is the processor configured to provide information on the spectral composition of the solar radiation, but the values calculated for the three distinct frequency spectra contribute to reduce the overall error. In fact, for example, the parameter relative to the position of the sun is calculated three times independently (for each of the three bands) and the overall positioning error is therefore reduced by a factor equal to √13.

Moreover, the photodetector elements 131, 132, 133, of each sensor from 13a to 13m need not to be expensive sensors of particularly high accuracy also because the measuring system of the invention provides that prior to putting into operation the polyhedral solar sensor 10 each of the corresponding sensors from 13a to 13m is calibrated via a calibration tool so that the output values of all the sensors are aligned with each other. This calibration reduces the overall error related to the measurement of a certain parameter by a factor equal to the square root of the number of sensors involved in the measurement of that determined parameter. For example, in the case of measuring the value of direct radiation, assuming a situation in which the group of directly illuminated sensors participating in the determination of the parameter is equal to six, and assuming that the constructive error of each sensor is equal to 5%, the error in measuring the parameter due to the constructive error is equal to 5%/√6 which corresponds to an error of about 2%.

Furthermore, the processor integrated in the polyhedral solar sensor 10 is configured to estimate the value of solar radiation reflected from the ground. In calculating the solar radiation reflected from the ground, the processor is configured to mainly take into account the values of the solar radiation detected by the sensors arranged vertically from 13g to 13m, and appropriately scaling the value of the diffused radiation. Moreover, in estimating the reflected solar radiation the processor is configured to take into account the differences in response that exist between the various photodetector elements 131, 132 and 133 that compose each sensor. In fact, depending on the type of soil and support on which the base 11 of the polyhedral solar sensor 10 is mounted, the reflected solar radiation will affect only a few limited frequency bands. The integrated processor is configured to then take into account the differences in the intensity detected in the three bands by the photodetector elements 131, 132 and 133 to calculate the reflected solar radiation. Moreover, since the polyhedral solar sensor is particularly suitable for being installed in a fixed place, the processor is also suitable to take into account past measurements and to estimate a value of the ground reflectance of the place where the polyhedral solar sensor 10 of the invention is installed. This value is then appropriately taken into account in determining the current value of the reflected solar radiation.

According to the same considerations and therefore according to the same parameters, the processor is also suitable to estimate the shape of the skyline. The processor is configured to determine the skyline shape based on the value of the diffused solar radiation and on the basis of the intensity of radiation detected by the second group of sensors from 13g to 13m by comparing the differences in detection between the corresponding photodetector elements 131, 132, and 133 and based on the knowledge of the azimuthal position of each of the sensors of the second group of sensors from 13g to 13m. In fact, since the sensors arranged vertically from 13g to 13m are oriented to detect the horizontally incident solar radiation, the evaluation of the reflected solar radiation allows the processor to estimate the height of the horizon line in front of them to determine, for instance, the presence of mountains or high buildings that contribute to determine the value of reflected light. This feature also allows a significant mounting tolerance of a polyhedral solar sensor according to the invention (+ or - 10° from the horizontal) without significant changes in the accuracy of the instrument. In other words, the integrated processor is configured to interpret the changes in measurement induced by a possible unaligned mounting as a modification of the skyline shape and to accordingly react by compensating the changes in the single measurements generated by said unaligned mounting.

All the parameters described above, namely the value of global solar radiation, of the diffused solar radiation, of the direct solar radiation, of the reflected solar radiation, related spectral components, the position of the sun, the skyline shape, are all determined by the processor integrated into the polyhedral solar sensor 10 of the invention and provided externally in the form of digital information.

In addition to what has been described above in relation to a preferred, but not limiting, embodiment of a system for measuring solar radiation by means of a polyhedral solar sensor according to the invention, further variations and modifications can certainly be provided. The invention is defined by the following claims.

## Claims

1. System for measuring the intensity of solar radiation consisting of a polyhedral solar sensor (10) comprising:
- a plurality of sensors (13a to 13m) each suitable for detecting the intensity of the solar radiation reaching it,
- a support (12) shaped to house said sensors (13a to 13m) in such a way that: a first group of sensors (13a to 13f) is arranged with a sensor on each face of a polyhedron with a first sensor (13a) which is arranged in an upper central face oriented upwards of said support (12), second sensors (13b to 13f) being arranged on lateral faces of said oriented polyhedron inclined upwards with a same elevation angle and angularly equidistant in the azimuthal plane; a second group of sensors (13g to 13m) in which the sensors are arranged angularly equidistant from each other in the azimuthal plane,
- an integrated processor electrically and / or electronically connected to said plurality of sensors (13a to 13m) to receive from each of said sensors data pertaining to the intensity of the solar radiation detected by it and to process said data to determine at least the intensity of global solar radiation, the intensity of direct solar radiation and the intensity of diffused solar radiation,
said solar radiation measurement system being **characterized in that** each of said sensors (13a to 13m) is arranged to measure separately in at least three different bands, the sensors of said second group of sensors (13g to 13m) being arranged vertically, said processor being configured for processing said data according to a predictive neural network scheme in which said sensors (13a to 13m) constitute input nodes of said neural network, said neural network being guided by an analytical algorithm suitable for scaling the measurements of said sensors (13a to 13m) based on coefficients defined by a geometric projection model of the point light source that is the sun on the faces of the polyhedral solar sensor (10) itself, and said processor being configured for determining the intensity of the solar radiation reflected by the ground based on the value of the diffused solar radiation and based on the intensity of the radiation detected by said second group of sensors (13g to 13m) by comparing the differences in the intensity detected by a same sensor in said at least three different bands.

2. System for measuring the intensity of the solar radiation according to claim 1, **characterized in that** said processor is configured for:
- making a subdivision of said sensors (13a to 13m) into two distinct groups of directly illuminated sensors and sensors not directly illuminated, said subdivision being performed on the basis of a comparison between the intensities of the solar radiation detected by each of said sensors (13a to 13m),
- determine the position of the sun based on the angular response of each sensor and on geometric triangulations performed on the data detected by at least three directly illuminated sensors.

3. System for measuring the intensity of the solar radiation according to claim 1 **characterized in that** said processor is configured to determine the skyline shape based on the value of the diffused solar radiation and on the basis of the intensity of the solar radiation detected by said second group of sensors (13 to 13m) comparing the detection differences between the respective photodetectors (131, 132, 133) and on the basis of the knowledge of the azimuthal position of each of said sensors of said second group of sensors (13g to 13m).

4. System for measuring the intensity of the solar radiation according to the previous claim, **characterized in that** said intensity of the solar radiation reflected by the ground and said skyline shape are determined also on the basis of an estimate of the ground reflectance around said polyhedral solar sensor (10) calculated on the basis of past measurements performed by said polyhedral sensor (10).

5. System for measuring the intensity of the solar radiation according to claim 3 or 4, **characterized in that** said processor is configured to interpret the measurement changes induced by a possible unaligned mounting of the solar sensor as a modification of the skyline shape and to react accordingly by compensating the changes in the single measurements generated by said unaligned mounting.

6. System for measuring the intensity of the solar radiation according to claim 1 **characterized in that** each of said sensors (13a to 13m) comprises three photodetector elements ( 132, 132, 133), one (131) for the detection of solar radiation in a spectrum of infrared frequencies, one (132) for the detection of solar radiation in a spectrum of visible frequencies and one (133) for the detection of solar radiation in a spectrum of ultraviolet frequencies.

7. System for measuring the intensity of the solar radiation according to claim 1 **characterized in that** each of said sensors (13a to 13m) is structurally univocal but capable to measure separately in three different bands, one of which for the detection of solar radiation in an infrared spectrum, one for the detection of solar radiation in a spectrum of visible frequencies and one for the detection of solar radiation in a spectrum of ultraviolet frequencies.

8. System for measuring the intensity of solar radiation according to claims 6, **characterized in that** each of said sensors (13a to 13m) comprises a sensor of temperature, the temperature values measured by said temperature sensor being used by said processor to compensate for the thermal drift of the photodetector elements (131, 132, 133) of said sensor.

9. System for measuring the intensity of solar radiation according to one of the preceding claims, **characterized in that** said support (11) is shaped in such a way that said first group of sensors (13a to 13f) comprises six sensors arranged according to adjacent faces of a dodecahedron and said second group of sensors (13g to 13m) comprises five sensors arranged angularly offset in the azimuthal plane with respect to the second sensors (13b to 13f) of said first group of sensors (13a to 13f).

## Patentansprüche

1. System zur Messung der Intensität der Sonnenstrahlung, bestehend aus einem polyedrischen Sonnensensor (10), umfassend:
- eine Vielzahl von Sensoren (13a bis 13m), die jeweils geeignet sind, die Intensität der sie erreichenden Sonnenstrahlung zu erfassen,
- einen Träger (12), der so geformt ist, dass er die Sensoren (13a bis 13m) aufnimmt, so dass: eine erste Gruppe von Sensoren (13a bis 13f) mit einem Sensor auf jeder Fläche eines Polyeders mit einem ersten Sensor (13a) angeordnet ist, der in einer oberen zentralen Fläche angeordnet ist, die nach oben des Trägers (12) ausgerichtet ist, wobei zweite Sensoren (13b bis 13f) auf Seitenflächen des ausgerichteten Polyeders angeordnet sind, die mit einem gleichen Höhenwinkel nach oben geneigt sind und in der Azimutalebene winkelmäßig äquidistant sind; eine zweite Gruppe von Sensoren (13g bis 13m), wobei die Sensoren in der Azimutalebene vertikal und winkelmäßig äquidistant zueinander angeordnet sind,
- einen integrierten Prozessor, der elektrisch und/oder elektronisch mit der Vielzahl von Sensoren (13a bis 13m) verbunden ist, um von jedem der Sensoren Daten zu empfangen, die sich auf die Intensität der von ihm erfassten Sonnenstrahlung beziehen, und um diese Daten zu verarbeiten, um zumindest die Intensität der globalen Sonnenstrahlung, die Intensität der direkten Sonnenstrahlung und die Intensität der diffusen Sonnenstrahlung zu bestimmen,
wobei das System zur Messung der Sonnenstrahlung **dadurch gekennzeichnet ist, dass** jeder der Sensoren (13a bis 13m) in der Lage ist, getrennt in mindestens drei verschiedenen Bändern zu messen, wobei die Sensoren der zweiten Gruppe von Sensoren (13g bis 13m) vertikal angeordnet sind, wobei der Prozessor so konfiguriert ist, dass er die Daten gemäß einem prädiktiven neuronalen Netzschema verarbeitet, in dem die Sensoren (13a bis 13m) Eingangsknoten des neuronalen Netzes bilden, wobei das neuronale Netz durch einen analytischen Algorithmus gesteuert wird, der geeignet ist, die Messungen der Sensoren (13a bis 13m) auf der Grundlage von Koeffizienten zu skalieren, die durch ein geometrisches Projektionsmodell der Punktlichtquelle, die die Sonne ist, auf den Flächen des polyedrischen Sonnensensors (10) selbst definiert sind, und wobei der Prozessor so konfiguriert ist, dass er die Intensität der vom Boden reflektierten Sonnenstrahlung auf der Grundlage des Wertes der diffusen Sonnenstrahlung und auf der Grundlage der Intensität der von der zweiten Gruppe von Sensoren (13g bis 13m) erfassten Strahlung bestimmt, indem er die Unterschiede in der Intensität vergleicht, die von einem gleichen Sensor in den mindestens drei verschiedenen Bändern erfasst wird.

2. System zur Messung der Intensität der Sonnenstrahlung nach Anspruch 1, **dadurch gekennzeichnet dass** der Prozessor konfiguriert ist für:
- eine Unterteilung der Sensoren (13a bis 13m) in zwei verschiedene Gruppen von direkt beleuchteten Sensoren und nicht direkt beleuchteten Sensoren vorzunehmen, wobei die Unterteilung auf der Grundlage eines Vergleichs zwischen den Intensitäten der von jedem der Sensoren (13a bis 13m) erfassten Sonnenstrahlung durchgeführt wird,
- der Position der Sonne auf der Grundlage des Winkelverhaltens jedes Sensors und geometrischer Triangulationen zu bestimmen, die anhand der von mindestens drei direkt beleuchteten Sensoren erfassten Daten durchgeführt werden.

3. System zur Messung der Intensität der Sonnenstrahlung nach Anspruch 1, **dadurch gekennzeichnet, dass** der Prozessor so konfiguriert ist, dass er die Form der Skyline auf der Grundlage des Wertes der diffusen Sonnenstrahlung und auf der Basis der Intensität der Sonnenstrahlung, die von der zweiten Gruppe von Sensoren (13g bis 13m) erfasst wird, bestimmt, indem er die Erfassungsunterschiede zwischen den jeweiligen Fotodetektoren (131, 132, 133) vergleicht, und auf der Grundlage der Kenntnis der azimutalen Position jedes der Sensoren der zweiten Gruppe von Sensoren (13g bis 13m).

4. System zur Messung der Intensität der Sonnenstrahlung nach dem vorhergehenden Anspruch, **dadurch gekennzeichnet, dass** die Intensität der vom Boden reflektierten Sonnenstrahlung und die Form der Skyline auch auf der Grundlage einer Schätzung des Bodenreflexionsgrads um den polyedrischen Sonnensensor (10) bestimmt werden, die auf der Grundlage früherer, von dem polyedrischen Sensor (10) durchgeführter Messungen berechnet wird.

5. System zur Messung der Intensität der Sonnenstrahlung nach Anspruch 3 oder 4, **dadurch gekennzeichnet, dass** der Prozessor so konfiguriert ist, dass er die durch eine mögliche nicht ausgerichtete Montage des Sonnensensors induzierten Messänderungen als eine Modifikation der Horizontform interpretiert und entsprechend reagiert, indem er die durch die nicht ausgerichtete Montage erzeugten Änderungen in den Einzelmessungen kompensiert.

6. System zur Messung der Intensität der Sonnenstrahlung nach Anspruch 1, **dadurch gekennzeichnet, dass** jeder der Sensoren (13a bis 13m) drei Photodetektorelemente (132, 132, 133) umfasst, eines (131) für die Erfassung der Sonnenstrahlung in einem Spektrum von Infrarotfrequenzen, eines (132) für die Erfassung der Sonnenstrahlung in einem Spektrum von sichtbaren Frequenzen und eines (133) für die Erfassung der Sonnenstrahlung in einem Spektrum von Ultraviolettfrequenzen.

7. System zur Messung der Intensität der Sonnenstrahlung nach Anspruch 1, **dadurch gekennzeichnet, dass** jeder der Sensoren (13a bis 13m) strukturell eindeutig ist, aber in der Lage ist, getrennt in drei verschiedenen Bändern zu messen, von denen eines für die Erfassung der Sonnenstrahlung in einem Infrarotspektrum, eines für die Erfassung der Sonnenstrahlung in einem Spektrum sichtbarer Frequenzen und eines für die Erfassung der Sonnenstrahlung in einem Spektrum ultravioletter Ultraviolettfrequenzen.

8. System zur Messung der Intensität der Sonnenstrahlung nach Anspruch 6, **dadurch gekennzeichnet, dass** jeder der Sensoren (13a bis 13m) einen Temperatursensor umfasst, wobei die von dem Temperatursensor gemessenen Temperaturwerte von dem Prozessor verwendet werden, um die thermische Drift der Photodetektorelemente (131, 132, 133) des Sensors zu kompensieren.

9. System zur Messung der Intensität der Sonnenstrahlung nach einem der vorhergehenden Ansprüche, **dadurch gekennzeichnet, dass** der Träger (11) so geformt ist, dass die erste Gruppe von Sensoren (13a bis 13f) sechs Sensoren umfasst, die entsprechend benachbarter Flächen eines Dodekaeders angeordnet sind, und die zweite Gruppe von Sensoren (13g bis 13m) fünf Sensoren umfasst, die in der Azimutalebene winkelversetzt in Bezug auf die zweiten Sensoren (13b bis 13f) der ersten Gruppe von Sensoren (13a bis 13f) angeordnet sind.

## Revendications

1. Système de mesure de l'intensité du rayonnement solaire constitué d'un capteur solaire polyédrique (10) comprenant:
- une pluralité de capteurs (13a à 13m) aptes chacun à détecter l'intensité du rayonnement solaire qui l'atteint,
- un support (12) conformé pour recevoir lesdits capteurs (13a à 13m) de manière à ce que: un premier groupe de capteurs (13a à 13f) est disposé avec un capteur sur chaque face d'un polyèdre avec un premier capteur (13a) qui est disposé dans une face centrale supérieure orientée vers le haut dudit support (12), des seconds capteurs (13b à 13f) étant disposés sur des faces latérales dudit polyèdre orienté inclinées vers le haut avec un même angle d'élévation et angulairement équidistantes dans le plan azimutal; un deuxième groupe de capteurs (13g à 13m) dans lequel les capteurs sont disposés verticalement et angulairement équidistants les uns des autres dans le plan azimutal,
- un processeur intégré connecté électriquement et/ou électroniquement à ladite pluralité de capteurs (13a à 13m) pour recevoir de chacun desdits capteurs des données relatives à l'intensité du rayonnement solaire détecté par celui-ci et pour traiter lesdites données afin de déterminer au moins l'intensité du rayonnement solaire global, l'intensité du rayonnement solaire direct et l'intensité du rayonnement solaire diffus,
ledit système de mesure du rayonnement solaire étant **caractérisé en ce que** chacun desdits capteurs (13a à 13m) est capable de mesurer séparément dans au moins trois bandes différentes, les capteurs dudit deuxième groupe de capteurs (13g à 13m) étant disposés verticalement, ledit processeur étant configuré pour traiter lesdites données selon un schéma de réseau neuronal prédictif dans lequel lesdits capteurs (13a à 13m) constituent des noeuds d'entrée dudit réseau neuronal, ledit réseau neuronal étant guidé par un algorithme analytique approprié pour mettre à l'échelle les mesures desdits capteurs (13a à 13m) sur la base de coefficients définis par un modèle de projection géométrique de la source lumineuse ponctuelle qu'est le soleil sur les faces du capteur solaire polyédrique (10) lui-même, et ledit processeur étant configuré pour déterminer l'intensité du rayonnement solaire réfléchi par le sol sur la base de la valeur du rayonnement solaire diffusé et sur la base de l'intensité du rayonnement détecté par ledit second groupe de capteurs (13g à 13m) en comparant les différences d'intensité détectée par un même capteur dans lesdites au moins trois bandes différentes.

2. Système de mesure de l'intensité du rayonnement solaire selon la revendication 1, **caractérisé en ce que** ledit processeur est configuré pour:
- effectuer une subdivision desdits capteurs (13a à 13m) en deux groupes distincts de capteurs directement éclairés et de capteurs non directement éclairés, ladite subdivision étant réalisée sur la base d'une comparaison entre les intensités du rayonnement solaire détectées par chacun desdits capteurs (13a à 13m),
- déterminer la position du soleil à partir de la réponse angulaire de chaque capteur et de triangulations géométriques effectuées sur les données détectées par au moins trois capteurs directement éclairés.

3. Système de mesure de l'intensité du rayonnement solaire selon la revendication 1, **caractérisé en ce que** ledit processeur est configuré pour déterminer la forme de la ligne d'horizon sur la base de la valeur du rayonnement solaire diffusé et sur la base de l'intensité du rayonnement solaire détecté par ledit second groupe de capteurs (13g à 13m) en comparant les différences de détection entre les photodétecteurs respectifs (131, 132, 133) et sur la base de la connaissance de la position azimutale de chacun desdits capteurs dudit second groupe de capteurs (13g à 13m).

4. Système de mesure de l'intensité du rayonnement solaire selon la revendication précédente, **caractérisé en ce que** ladite intensité du rayonnement solaire réfléchi par le sol et ladite forme de ligne d'horizon sont déterminées également sur la base d'une estimation de la réflectance du sol autour dudit capteur solaire polyédrique (10) calculée sur la base de mesures passées effectuées par ledit capteur polyédrique (10).

5. Système de mesure de l'intensité du rayonnement solaire selon la revendication 3 ou 4, **caractérisé en ce que** ledit processeur est configuré pour interpréter les changements de mesure induits par un éventuel montage non aligné du capteur solaire comme une modification de la forme de l'horizon et pour réagir en conséquence en compensant les changements dans les mesures individuelles générées par ledit montage non aligné.

6. Système de mesure de l'intensité du rayonnement solaire selon la revendication 1, **caractérisé en ce que** chacun desdits capteurs (13a à 13m) comprend trois éléments photodétecteurs (132, 132, 133), un (131) pour la détection du rayonnement solaire dans un spectre de fréquences infrarouges, un (132) pour la détection du rayonnement solaire dans un spectre de fréquences visibles et un (133) pour la détection du rayonnement solaire dans un spectre de fréquences ultraviolettes.

7. Système de mesure de l'intensité du rayonnement solaire selon la revendication 1, **caractérisé en ce que** chacun desdits capteurs (13a à 13m) est structurellement univoque mais capable de mesurer séparément dans trois bandes différentes, dont une pour la détection du rayonnement solaire dans un spectre infrarouge, une pour la détection du rayonnement solaire dans un spectre de fréquences visibles et une pour la détection du rayonnement solaire dans un spectre de fréquences ultraviolettes.

8. Système de mesure de l'intensité du rayonnement solaire selon la revendication 6, **caractérisé en ce que** chacun desdits capteurs (13a à 13m) comprend un capteur de température, les valeurs de température mesurées par ledit capteur de température étant utilisées par ledit processeur pour compenser la dérive thermique des éléments photodétecteurs (131, 132, 133) dudit capteur.

9. Système de mesure de l'intensité du rayonnement solaire selon l'une des revendications précédentes, **caractérisé en ce que** ledit support (11) est conformé de telle sorte que ledit premier groupe de capteurs (13a à 13f) comprend six capteurs disposés selon les faces adjacentes d'un dodécaèdre et ledit second groupe de capteurs (13g à 13m) comprend cinq capteurs disposés angulairement décalés dans le plan azimutal par rapport aux seconds capteurs (13b à 13f) dudit premier groupe de capteurs (13a à 13f).
